# EUROPÄISCHE PATENTSCHRIFT

(11) **EP 1 560 022 B1**
(45) Veröffentlichungstag und Bekanntmachung des Hinweises auf die Patenterteilung: **17.10.2012**
(21) Anmeldenummer: 05001086.7
(22) Anmeldetag: 20.01.2005
(51) Int. Cl.: G01N 31/22, C09B 11/00

(54) **Teststäbchen zur Bestimmung des Gehalts von Komplexbildnern in Flüssigkeiten**
Test strip for determining the concentration of complexants in fluids
Bâtonnet diagnostique permettant de déterminer la concentration de complexant dans un fluide

(30) Priorität: 29.01.2004 DE 202004001395 U
(43) Veröffentlichungstag der Anmeldung: 03.08.2005
(73) Patentinhaber: Macherey, Nagel GmbH & Co. Handelsgesellschaft, 52355 Düren (DE)
(72) Erfinder: Radmacher, Edmund, Dr., 52349 Düren (DE); Möller, Klaus, Dr., 52249 Eschweiler (DE); Hoffmann, Jürgen, Dr., 52355 Düren (DE)
(74) Vertreter: Paul, Dieter-Alfred

(56) Entgegenhaltungen:
- US-A- 5 137 834
- BUDYAK N F ET AL: "Complexonometric determination of aluminum and iron in magnetic alloys" INDUSTRIAL LABORATORY USA, Bd. 36, Nr. 10, Oktober 1970 (1970-10), Seite 1524, XP009047782 ISSN: 0019-8447
- DATABASE WPI Section Ch, Week 199039 Derwent Publications Ltd., London, GB; Class E16, AN 1990-295939 XP002328231 & SU 1 525 574 A (COLLOID CHEM WATER) 30. November 1989 (1989-11-30)
- AGRAWAL Y K ET AL: "Extraction and spectrophotometric determination of bismuth(III) with N-m-tolyl-p-chlorobenzohydroxamic acid and xylenol orange." THE ANALYST. OCT 1984, Bd. 109, Nr. 10, Oktober 1984 (1984-10), Seiten 1287-1289, XP009047645 ISSN: 0003-2654

## Beschreibung

Die Erfindung betrifft eine Vorrichtung zur Bestimmung des Gehalts von Komplexbildnern in Flüssigkeiten, insbesondere in wässrigen Flüssigkeiten oder Wasser.

Komplexbildner wie z.B. Ethylendiamintetraessigsäure (EDTA) oder Nitrilotriessigsäure (NTA) werden häufig als Zusatzstoffe in Wasch- und Reinigungsmitteln, in Kosmetika, in der Fotoindustrie oder in der Papierindustrie verwendet. Solche Zusatzstoffe sind biologisch nur schwer abbaubar, weshalb man bestrebt ist, ihren Einsatz zu reduzieren.

Zur Bestimmung der Konzentration von Komplexbildnern sind ausschließlich naßchemische Verfahren bekannt. Ein Beispiel hierfür ergibt sich aus der DIN 38409, Teil 26 (Mai 1989). Grundlage des darin beschriebenen Verfahrens ist die Redoxreaktion mit Bismuth-Xylenolorange. Das Verfahren ist relativ kompliziert und setzt den Einsatz teuerer Meßgeräte voraus.

Ein weiteres nasschemisches Verfahren ist der US-A-5 137 834 zu entnehmen. Bei diesem Verfahren findet eine komplexometrische Titration mit Hilfe einer Bismuthnitrat-Standartlösung in Gegenwart von Methylthymolblau statt. In dem Dokument BUDYAK N F ET AL "Complexonometric Determination of Aluminum and Iron in Magnetic Alloys" INDUSTRIAL LABORATORY USA, Bd. 36, Nr. 10, Oktober 1970, ist ein Verfahren zur Bestimmung von Metallionen mit magnetischen Legierungen durch komplexometrische Titration mit Hilfe von Komplexbildern und Bismuthnitrat in Gegenwart von Xylenolorange beschrieben. Auch hierbei handelt es sich um ein nasschemisches Verfahren. In dem Dokument DATABASE WPI Section CH, Week 199039 Derwent Publications Ltd., London, GB; Class E16, AN 1990-295939 & SU 1 525 574 A (COLLOID CHEM WATER) 30. November 1989 (1989-11-30), ist ein nasschemisches Verfahren zur Bestimmung von EDTA in Wasser offenbart, wobei Bismuthnitrat und ein Hydrazin-Farbindikator als Reagenzen eingesetzt werden. In dem Dokument AGRAWAL Y K ET AL "Extraction and Spectrophotometric Determination of Bismuth(III) with N-m-tolylp-chlorobenzohydroxamic Acid and Xylenol Orange", THE ANALYST. OCT 1984, Bd. 109, Nr. 10, Oktober 1984 Seiten 1287-1289, ist ein nasschemisches Verfahren zur Bestimmung von Bismuth (III) beschrieben. Sämtliche Verfahren sind - wie das Verfahren nach DIN 38409 - relativ kompliziert und setzen teure Messgeräte voraus.

Der Erfindung liegt somit die Aufgabe zugrunde, eine Vorrichtung zur Bestimmung des Gehalts von Komplexbildnern in Flüssigkeiten bereitzustellen, die einen schnellen und unkomplizierten Nachweis von Komplexbildnern zuläßt.

Diese Aufgabe wird erfindungsgemäß dadurch gelöst, daß die Vorrichtung als Teststäbchen mit einem vorzugsweise als Indikatorpapier ausgebildeten Indikatorträger ausgebildet ist, wobei der Indikatorträger mit folgender Imprägnierlösung imprägniert ist:
a) destilliertes Wasser;
b) 0,1 bis 2,0 Gew.% Xylenolorange, bezogen auf das destillierte Wasser;
c) mindestens 0,02 Gew.% Bismuthnitrat, bezogen auf das destillierte Wasser;
d) der pH-Wert der Imprägnierlösung ist auf einen Wert ≤ 2, besser noch ≤ 1 eingestellt.

Grundgedanke der Erfindung ist es also, ein Teststäbchen bereitzustellen, dessen Indikatorträger mit einer solchen Imprägnierlösung versehen ist, daß ein der Menge des in der Flüssigkeit vorhandenen Komplexbildners entsprechender Farbumschlag beim Eintauchen des Teststäbchens erfolgt und auf diese Weise eine zumindest halbquantitative Aussage über den Gehalt an Komplexbildnern erhalten wird. Teststäbchen lassen sich auf einfache Weise zu dem Meßort transportieren, und es sind keine Geräte erforderlich, um den Farbumschlag zu interpretieren. Mit Hilfe von einfachen Farbskalen kann ein Vergleich durchgeführt werden, der einen Rückschluß über den Gehalt an Komplexbildnern zuläßt. In vielen Fällen reicht die hierdurch erzielbare Genauigkeit aus.

In Ausbildung der Erfindung ist vorgesehen, daß die Imprägnierlösung wenigstens 0,2 Gew.% Xylenolorange, bezogen auf das destillierte Wasser, enthält. Entsprechend sollte die Imprägnierlösung wenigstens 0,12 Gew.% Bismuthnitrat, bezogen auf das destillierte Wasser, enthalten. Wesentlich ist, daß die beiden Substanzen in einem solchen Mengenverhältnis in der Imprägnierlösung vorhanden sind, daß durch den in der Flüssigkeit vorhandenen Komplexbildner ein charakteristischer Farbumschlag bewirkt wird.

Der pH-Wert der Imprägnierlösung sollte durch Zugabe einer Säure niedrig eingestellt werden. Hierzu eignet sich insbesondere Zitronensäure. Sie sollte in der Imprägnierlösung mit einem Gehalt von 40 bis 60 Gew.%, bezogen auf das destillierte Wasser, vorhanden sein.

Als Indikatorträger eignen sich vor allen Dingen Indikatorpapiere, also übliche Filterpapiere, die dann an einem Trägerstäbchen angebracht sind.

In der Zeichnung ist die Erfindung anhand eines Ausführungsbeispiels näher veranschaulicht. Es zeigen:

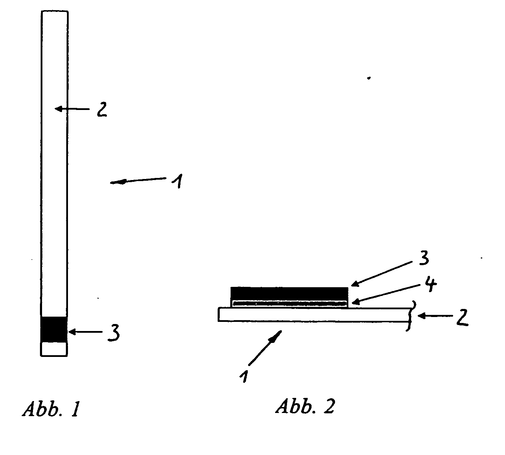

- Abbildung 1: das erfindungsgemäße Teststäbchen in der Draufsicht und
- Abbildung 2: das Teststäbchen gemäß Figur 1 in der Seitenansicht (nur teilweise).

Das in den Figuren dargestellte Teststäbchen 1 hat ein langgestrecktes Trägerstäbchen 2 aus einem geeigneten Kunststoffmaterial (es kann auch aus Karton oder Metall bestehen). Das Trägerstäbchen 2 ist im wesentlichen starr, wenn auch in Grenzen biegsam.

Benachtbart einem der beiden stirnseitigen Enden ist ein saugfähiger Indikatorträger 3, beispielsweise aus einem Filterpapier, über eine Kleberschicht 4 auf einer Flachseite des Trägerstäbchens 2 befestigt. Der Indikatorträger 3 ist mit einer Imprägnierlösung imprägniert, bei der in 50 ml destilliertes Wasser 25 g Zitronensäure, 0,1 g Xylenolorange und 0,06 g Bismuthnitrat gelöst sind. Taucht man das Teststäbchen in eine Lösung ein, die keinen Komplexbildner wie EDTA enthält, so färbt sich der Indikatorträger 3 rot. Taucht man das Teststäbchen 1 in eine Lösung mit einem Komplexbildner wie EDTA ein, so färbt sich der Indikatorträger 3 je nach Komplexbildner-Konzentration von orange nach gelb. Durch Vergleich mit einer Farbskala lassen sich Konzentrationen von 100 bis 400 mg/l EDTA halbquantitativ bestimmen. Dies gilt auch für andere Komplexbildner wie beispielsweise Nitrilotriessigsäure, Cyclohexandinitrilo(1,2)-tetraessigsäure, Dieethyltrinitrilopentaessigsäure oder Bis(aminoethyl)-glykolether-N,N,N',N'-tetraessigsäure.

## Patentansprüche

1. Vorrichtung zur halbquantitativen Bestimmung des Gehalts von Komplexbildern in Flüssigkeiten, **dadurch gekennzeichnet, dass** die Vorrichtung als Teststäbchen (1) mit einem Indikatorträger (3) ausgebildet ist, wobei der Indikatorträger (3) mit einer Imprägnierlösung folgender Zusammensetzung imprägniert ist:
a) destilliertes Wasser;
b) Xylenolorange in einer Menge von 0,1 bis 2 Gew.%, bezogen auf das destillierte Wasser;
c) wenigstens 0,02 Gew.% Bismuthnitrat, bezogen auf das destillierte wasser;
d) der pH-Wert der Imprägnierlösung ist auf einen Wert ≤ 2 eingestellt.

2. Vorrichtung nach Anspruch 1, **dadurch gekennzeichnet, dass** die Imprägnierlösung wenigstens 0,2 Gew.% Xylenolorange, bezogen auf das destillierte Wasser, enthält.

3. Vorrichtung nach Anspruch 1 oder 2, **dadurch gekennzeichnet, dass** der pH-wert der Imprägnierlösung durch Zugabe von zitronensäure eingestellt ist.

4. Vorrichtung nach Anspruch 3, **dadurch gekennzeichnet, dass** die Imprägnierlösung 40 bis 60 Gew.% Zitronensäure, bezogen auf das destillierte Wasser, enthält.

5. Vorrichtung nach einem der Ansprüche 1 bis 4, **dadurch gekennzeichnet, dass** die Imprägnierlösung wenigstens 0,12 Gew.% Bismuthnitrat, bezogen auf das destillierte Wasser, enthält.

6. Vorrichtung nach einem der Ansprüche 1 bis 5, **dadurch gekennzeichnet, dass** der Indikatorträger (3) als Indikatorpapier ausgebildet ist, das an einem Trägerstäbchen (2) angebracht ist.

## Claims

1. An apparatus for the semi-quantitative determination of the content of complexants in fluids, **characterised in that** the apparatus is in the form of a test strip (1) with an indicator carrier (3), the indicator carrier (3) being impregnated with an impregnation solution with the following composition:
a) distilled water;
b) xylenol orange in a quantity of 0.1 to 2% by weight in relation to the distilled water;
c) at least 0.02% by weight bismuth nitrate in relation to the distilled water;
d) the pH value of the impregnation solution is set to a value ≤ 2.

2. The apparatus according to Claim 1, **characterised in that** the impregnation solution contains at least 0.2% by weight xylenol orange in relation to the distilled water.

3. The apparatus according to Claim 1 or 2, **characterised in that** the pH value of the impregnation solution is set by adding citric acid.

4. The apparatus according to Claim 3, **characterised in that** the impregnation solution contains 40 to 60% by weight citric acid in relation to the distilled water.

5. The apparatus according to any of Claims 1 to 4, **characterised in that** the impregnation solution contains at least 0.12% by weight bismuth nitrate in relation to the distilled water.

6. The apparatus according to any of Claims 1 to 5, **characterised in that** the indicator carrier (3) is in the form of indicator paper that is attached to a carrier strip (2).

## Revendications

1. Dispositif pour la détermination semi-quantitative de la teneur en agents complexant dans les liquides, **caractérisé en ce que** le dispositif est construit comme un bâtonnet de test (1) avec un porteur d'indicateur (3), le porteur d'indicateur (3) étant imprégné d'une solution d'imprégnation de la composition suivante:
a) eau distillée;
b) orange de xylénol, dans une proportion de 0,1 à 2 %m, relativement à l'eau distillée;
c) au moins 0,02 %m de nitrate de bismuth, relativement à l'eau distillée;
d) la valeur PH de la solution d'imprégnation est réglée à ≤ 2.

2. Dispositif selon la revendication 1, **caractérisé en ce que** la solution d'imprégnation contient au moins 0,2 %m de son poids en orange de xylénol, relativement à l'eau distillée.

3. Dispositif selon la revendication 1 ou 2, **caractérisé en ce que** la valeur PH de la solution d'imprégnation est réglée à l'aide d'ajout d'acide citrique.

4. Dispositif selon la revendication 3, **caractérisé en ce que** la solution d'imprégnation contient de 40 à 60 %m d'acide citrique, relativement à l'eau distillée.

5. Dispositif selon l'une des revendications 1 à 4, **caractérisé en ce que** la solution d'imprégnation contient au moins 0,12 %m de nitrate de bismuth, relativement à l'eau distillée.

6. Dispositif selon l'une des revendications 1 à 5, **caractérisé en ce que** le porteur d'indicateur (3) est construit comme un papier indicateur installé sur un bâtonnet de test.
